# EUROPÄISCHE PATENTSCHRIFT

(11) **EP 2 732 405 B1**
(45) Veröffentlichungstag und Bekanntmachung des Hinweises auf die Patenterteilung: **13.11.2019**
(21) Anmeldenummer: 12737489.0
(22) Anmeldetag: 10.07.2012
(51) Int. Cl.: G06K 19/077

(54) **FLÄCHIGER TRÄGER FÜR EINEN GEGENSTAND**
FLAT SUPPORT FOR AN ARTICLE
SUPPORT PLAN POUR UN OBJET

(30) Priorität: 13.07.2011 DE 102011107203
(43) Veröffentlichungstag der Anmeldung: 21.05.2014
(73) Patentinhaber: Giesecke+Devrient Mobile Security GmbH, 81677 München (DE)
(72) Erfinder: CUSATI, Marco, 85435 Erding (DE); MÜHL, Paul, 81927 München (DE)
(86) Internationale Anmeldenummer: PCT/EP2012/002904
(87) Internationale Veröffentlichungsnummer: WO 2013/007377

(56) Entgegenhaltungen:
- EP-A1- 0 869 452
- EP-A2- 0 638 873
- DE-A1- 19 906 570
- DE-U1- 29 504 946
- US-A1- 2010 078 485

## Beschreibung

Die Erfindung betrifft einen flächigen Träger für einen Gegenstand sowie ein Herstellungsverfahren für derartige Träger.

Aus dem Stand der Technik sind Träger allgemein bekannt. Beispielsweise beschreibt die DE 8307205 U1 ein Etui zur Aufbewahrung von Kredit- und Scheckkarten des ID-1 Formats, bei dem die Scheckkarte in eine dreiseitig verschlossene Hülle gesteckt wird, sodass diese vor äußeren Umwelteinflüssen geschützt ist.

Sollen Gegenstände kleiner dem ID-1 Kartenformat transportiert werden, muss sichergestellt sein, dass auch diese während eines Transports geschützt sind. Es besteht weiterhin ein Bedarf an Transporthüllen für Gegenstände, die nur einmal transportiert werden müssen, insbesondere für die Auslieferung dieser Gegenstände als Produkte an ihre Kunden. Der Kunde entnimmt häufig den Gegenstand für eine zweckgemäße Bestimmung des Gegenstands, wobei die Transporthülle ab diesem Zeitpunkt nicht mehr benötigt wird. Dokument EP 0 638 873 A2 beschreibt einen solchen Träger.

Der Erfindung liegt daher die Aufgabe zugrunde, einen Träger bereitzustellen, in der Gegenstände sicher transportiert werden können. Es ist dabei sicherzustellen, dass der Gegenstand fixiert ist und nicht aus dem Träger fällt. Trotzdem soll der Gegenstand leicht aus der Hülle entnommen werden können. Insbesondere für die Verwendung des Trägers als Einmalverpackung sollte dieser Träger umweltfreundlich und kostengünstig hergestellt werden, wobei der Gegenstand weiterhin sicher transportiert werden muss. Speziell im Anwendungsbereich von tragbaren Datenträgern, wie Chipkarten ist es eine Aufgabe, den Datenträger mit unterschiedlichen Formfaktoren bereitzustellen, sodass der Benutzer des Datenträgers die für sein Endgerät benötigte Form des Datenträgers wählen kann. Derartige Formadapter müssen kostengünstig sein, sollen aber für jegliche Form Stabilität und Funktionsfähigkeit aufweisen können. Es ist eine weitere Aufgabe der Erfindung einen Träger in Form eines Formadapters bereitzustellen.

Diese Aufgaben werden durch die in den nebengeordneten unabhängigen Patentansprüchen beschriebenen Maßnahmen gelöst. Vorteilhafte Ausgestaltungen sind in den jeweils abhängigen Ansprüchen beschrieben.

Insbesondere wird die Aufgabe durch einen flächigen Träger für einen Gegenstand gelöst, wobei der Träger ein Aufnahmeelement zur Aufnahme es Gegenstands aufweist und dieses Aufnahmeelement in Form einer Ausnehmung ausgestaltet ist und wobei die Ausnehmung den Gegenstand vollständig aufnimmt. Der Träger weist zumindest im Bereich der Ausnehmung eine schichtförmige Abdeckung zum vollflächigen Abdecken der Ausnehmung auf.

Bei dem Gegenstand handelt es sich beispielsweise um einen tragbaren Datenträger mit entsprechenden Sicherheitsfunktionalitäten, wie z.B. Smart Cards, Chipkarten, Token, Massenspeicherkarten, Multimediakarte, Teilnehmeridentifikationskarten in einem mobilen Funknetz und/oder um elektronische Identitätsdokumente, wie beispielsweise einem elektronischen Personalausweis, einem Reisepass mit, auf einem Chip gespeicherten maschinenlesbaren Identifikationsdaten einer Person. Insbesondere wird eine Chipkarte unter dem Begriff tragbarer Datenträger verstanden, wobei das Anwendungsgebiet der Chipkarte sehr vielfältig ist, beispielsweise als Kredit- oder Debit-Bezahlkarte, Gesundheitskarte, Zutrittsberechtigungskarte, Firmenausweis, SIM-Karten, Identifikationskarte, elektronischer Fahrzeugschein oder Führerschein.

Ist der Gegenstand ein tragbarer Datenträger, insbesondere eine Chipkarte, in einem ersten Formfaktor, so ist es vorteilhaft, wenn der Träger als ein Formadapter in einem zweiten, vom ersten Formfaktor verschiedenen Formfaktor für Datenträger ausgestaltet ist.

Insbesondere ist der Gegenstand ein tragbarer Datenträger eines Formfaktors kleiner dem in der ISO/IEC 7816-2 beschrieben ID-1 Kartenform. Beispielsweise ist der tragbare Datenträger eine Teilnehmeridentifikationskarte, kurz SIM, im Format ID-000 oder Mini-UICC, auch ID-3FF genannt. Die Dicke derartiger Formfaktoren ist bislang einheitlich und beträgt 0,762mm.

Bevorzugt ist der Gegenstand eine SIM in einem kleineren Format als dem heute kleinsten ID-3FF Format, beispielsweise in einem Formfaktor der umgangssprachlich mit Nano-SIM oder 4FF bezeichnet wird. Die Dicke der Nano-SIM ist möglicherweise gegenüber der bislang standardisierten Dicke von 0,762mm verringert und beispielsweise nur noch 0,7 mm.

Insbesondere weist der Träger die Außenmaße einer gemäß ISO/IEC 7816-2 beschriebenen ID-1 Chipkarte auf, sodass die Außenkontur des Trägers die Maße von 85,725mm mal 53,975mm beträgt. Dadurch kann der Träger wie eine normale Chipkarte im ID-1 Format transportiert und beispielsweise in einer Geldbörse etc. untergebracht werden.

Wird nun der Träger im ID-1 Format als Formfaktor hergestellt und der Datenträger im ID-000, ID-3FF oder ID-4FF Formfaktor, so kann der Träger gleichzeitig als Formadapter ausgestaltet sein.
In einer Weiterbildung weist der Träger weiterhin Vorausstanzungen außerhalb der Aufnehmung aufweist, sodass der Träger durch die Vorstanzungen teilbar ist. Dadurch weist der Träger nach der Teilung einen dritten Formfaktor (ID-000 oder ID-3FF) auf, der kleiner als der zweite Formfaktor (ID-1) aber größer als der erste Formfaktor (ID-4FF) ist. Der Benutzer kann den Träger somit als einen sehr flexiblen Formadapter für Chipkarten verwenden und der Benutzer entscheidet nach Auslieferung der Chipkarte im erfindungsgemäßen Träger, welcher Formfaktor er für sein Endgerät, in dem die Chipkarte bestimmungsgemäß eingesetzt werden soll, Anwendung finden soll.

Alternativ ist der Gegenstand natürlich nicht auf tragbare Datenträger beschränkt, sondern kann jegliche Art und Form aufweisen. Beispielsweise ist der Gegenstand eine Geldmünze, ein fotografisches Bild, ein Schlüssel oder ein Informationsprospekt.

Durch die erfindungsgemäße Ausgestaltung des Träger und insbesondere der Beschichtung der Ausnehmung wird erreicht, dass der Gegenstand fest in der Ausnehmung eingebracht ist und nicht während des Transports des Trägers aus der Ausnehmung heraus fällt. Durch diese Fixierung können insbesondere kleine Gegenstände nicht verloren gehen oder bruchanfällige Gegenstände nicht beschädigt werden.

In einer bevorzugten Ausgestaltung ist die Dicke des Trägers gleich oder größer der Dicke des Gegenstands, sodass der Gegenstand im Aufnahmeelement oberseitenbündig im Träger eingebracht ist. Mit oberseitenbündig ist gemeint, dass die Oberseite des Gegenstands weder über die Oberseite noch über die Unterseite des Trägers hinausragt. Dadurch kann der Gegenstand mittels des Trägers aus der Transporthülle entnommen und wieder eingeschoben werden, ohne dass der Gegenstand an der Transporthülle hängen bleibt oder nicht in die Transporthülle eingeschoben werden kann. In einer bevorzugten Ausgestaltung ist die Abdeckung ein Aufkleber. Ein Aufkleber ist üblicherweise ein Druckerzeugnis aus Papier oder Kunststoff, das auf einer Seite bedruckt, auf der anderen Seite mit einer Selbstklebefläche ausgestattet ist. Diese Selbstklebefläche sorgt für die Haftung der Abdeckung auf der Oberseite des Trägers. Der Aufkleber kann insbesondere bedruckt sein. Beispielsweise sind optische Personalisierungsdaten des Gegenstands oder ein Designdruck bereits auf der Abdeckung enthalten, sodass ein nachträgliches Bedrucken des Trägers mit einem aufgenommenen Gegenstand entfallen kann. Somit ist bei Verwendung eines Aufklebers als Abdeckung das Herstellungsverfahren für einen Träger vereinfacht.

In einer bevorzugten Ausgestaltung ist die Abdeckung vollflächig auf einer Oberseite des Trägers ausgebildet. Somit könnte der Träger auch optisch personalisiert und/oder mit einem Designdruck versehen werden. Weiterhin ist die vollflächige Beschichtung bei der Herstellung in großen Stückzahlen vor der Vereinzelung der Träger kosteneffizienter und schneller.

In einer bevorzugten Ausgestaltung ist die Abdeckung aus einem papierartigen Material, welches auf den Träger mittels Klebemittel aufgebracht ist. Damit kann diese Abdeckung durch den Benutzer leicht entfernt werden und der Gegenstand gut entnommen werden, wobei er während des Transports im Träger fixiert ist.

Insbesondere ist auf der Abdeckung eine Perforation ausgebildet. Als Perforation ist hierbei eine Durchlochung der Abdeckung zu verstehen. Die regelmäßige Anordnung, Anzahl, Form und Größe der Durchlochungen sind entsprechende Parameter, die in Abhängigkeit des Materials der Abdeckung einzustellen sind. Schlitz- und Lochstanzung sind insbesondere bei Papier oder Karton als Material der Abdeckung zu wählen, sodass die Abdeckung entlang der Perforation getrennt werden kann. Diese Perforation kann bereits in der Abdeckung enthalten gewesen sein, bevor der Träger mit der Abdeckung beschichtet wurde. Alternativ wird die Perforation in einem Perforierschritt auf die Abdeckung gebracht. Durch die Perforation ist die Abdeckung leichter entfernbar, wenn der Gegenstand aus dem Träger entnommen wird.

In einer Ausgestaltung der Erfindung ist die Ausnehmung eine Durchstanzung des Trägers. Die Abdeckung ist dabei auf mindestens einer Oberseite des Trägers ausgebildet. Wird die Abdeckung nur auf einer Oberseite ausgebildet, ist auf der, der Oberseite gegenüberliegenden Unterseite des Trägers leicht erkennbar, ob ein Gegenstand auf dem Träger angeordnet ist. Zum anderen kann der Gegenstand kontaktiert werden. Insbesondere bei der Herstellung und Bestückung von Datenträgern auf dem Träger kann nunmehr eine elektrische Personalisierung durch Durchstanzung durchgeführt werden, ohne den Datenträger aus dem Träger entnehmen zu müssen oder alternativ ihn vor der Bestückung auf dem Träger bereits personalisiert zu haben.

Der Träger kann somit auch als sogenannte Shuttle-Karte in einer elektrischen Personalisierungseinrichtung verwendet werden. Wenn die Personalisierungseinrichtung für die Personalisierung eines Formfaktor des Gegenstands eingerichtet ist, kann mit dem erfindungsgemäßem Träger als Formadapter eine Personalisierung von Gegenständen eines - von dem Formfaktor der Personalisierungseinrichtung - verschiedenen Formfaktors durchgeführt werden, ohne die Personalisierungseinrichtung umbauen oder anpassen zu müssen.

In einer vorteilhaften Ausgestaltung ist der Träger vollständig in eine Transporthülle eingebracht, wobei die Transporthülle eine vordere Außenschicht und eine hintere Außenschicht aufweist. Dadurch ist der Gegenstand gegen äußere Umwelteinflüsse geschützt und wird sehr sicher transportiert. Durch die zusätzliche Abdeckung wird sichergestellt, dass der Gegenstand nicht während des Transports aus dem Träger fällt, wodurch er verloren gehen oder beschädigt werden könnte.

In einer bevorzugten Ausgestaltung der Erfindung ist der Träger als beweglicher Teil in einer Mittelschicht zwischen der vorderen Außenschicht und der hinteren Außenschicht in der Transporthülle angeordnet. Der unbewegliche Teil der Mittelschicht ist mechanisch unlösbar mit der vorderen Außenschicht und der hinteren Außenschicht verbunden, wobei der flächige Träger von außerhalb der Transporthülle zugänglich ist und bewegt werden kann. Dazu ist beispielsweise eine Einbuchtung in zumindest einer der Außenschichten ausgeformt.

Die unlösbare Verbindung ist insbesondere durch ein Verkleben der einzelnen Schichten erzielt. Das Verkleben wird mittels eines geeigneten Klebemittels erreicht. Das Verkleben ist abhängig von der Art und Beschaffenheit des Materials, aus dem die einzelnen Schichten aufgebaut sind. Bei der Verwendung von Papier, Pappe oder Karton eignet sich als Klebemittel bevorzugt um ein leimartiges Klebemittel.

In einer vorteilhaften Ausgestaltung der Erfindung kann der Träger nur unvollständig aus der Transporthülle bewegt werden. Dazu weist der Träger einen Anschlag auf, der die Beweglichkeit des Trägers begrenzt, sodass der Träger bei Bewegung aus der Transporthülle gegen ein entsprechendes Gegenstück innerhalb der Transporthülle, insbesondere der Mittelschicht, anschlägt und nicht über diesen Punkt hinaus aus der Hülle entnommen werden kann. Durch diese Ausgestaltung wird erreicht, dass der Träger immer mit der Transporthülle mechanisch beweglich verbunden ist, allerdings nie von der Transporthülle getrennt werden kann.

In einer bevorzugten Ausgestaltung der Erfindung weist das unbewegliche Teilelement Führungen auf, um die Bewegung des Trägers führen zu können. Das Ende der Führung kann dabei das Gegenstück des Anschlags des Trägers sein. Die Führung kann insbesondere ein Langloch in der Mittelschicht sein. Dieses Langloch ist insbesondere ein ausgestanztes Langloch. In der Höhe des Langlochs kann nun der Träger bewegt werden. Diese Führungen sind alternativ Führungsschienen, in denen der Träger innerhalb der Transporthülle geführt wird.

Anschlag und Führung sind insbesondere Teilelemente der Mittelschicht des Trägers, wobei in einer bevorzugten Ausgestaltung der Anschlag derart geformt ist, dass er in der Führung der Mittelschicht, insbesondere einem ausgestanzten Langloch, entlang bewegt wird. Bei Bewegung des Trägers aus der Transporthülle heraus stößt der Anschlag in einer Endposition an das Ende der Führung, sodass der Träger nicht weiter aus der Hülle bewegt werden kann.

Mit beweglichem Teilelement wird nachfolgend ein Teilelement der Mittelschicht verstanden, welches innerhalb der Transporthülle beweglich angeordnet ist. Insbesondere kann der bewegliche flächige Träger lateral aus der Transporthülle bewegt werden. Durch diese Transporthülle wird also vorteilhaft ein Mechanismus geschaffen, durch den der Träger, auch als Schiebeelement oder Slider zu verstehen, innerhalb der Hülle und lateral nach außerhalb der Hülle beweglich ist. Zum Herausnehmen des Gegenstands aus der Transporthülle wird der Träger entsprechend aus der Hülle bewegt. Somit ist der Gegenstand während des Transports durch die Hülle geschützt und kann trotzdem leicht entnommen werden.

Durch die erfindungsgemäße Ausgestaltung des Träger und der Transporthülle wird erreicht, dass der Gegenstand zum einen fest in der Ausnehmung eingebracht ist und von den Außenschichten der Hülle geschützt ist. Des Weiteren wird durch die Ausnehmung sichergestellt, dass der Gegenstand oberseitenbündig in den Träger eingebracht wird, wodurch ein problemloses Einschieben des Trägers in die Hülle bzw. Herausschieben des Trägers aus der Hülle heraus erzielt ist.

Die Außenschichten sind in einer Ausgestaltung aus dem gleichen Material wie die Mittelschicht. Dadurch können Klebemittel eingesetzt werden, die die einzelnen Schichten mechanisch unlösbar verbinden, sodass die Transporthülle stabil ist gegenüber äußeren Umwelteinflüssen.

Die Dicke der Außenschichten ist in einer Ausführungsform identisch mit der Dicke der Mittelschicht mit dem Träger. Hierdurch wird eine sehr kompakte und stabile Transporthülle erhalten.

In einer Ausgestaltung der Erfindung sind die Außenschichten aus einem von dem Träger verschiedenen Material, sodass beispielsweise ein stabiler Träger zum Aufnehmen des Gegenstands ausgebildet ist, der von den zwei Außenschichten umhüllt wird, welche zum einen eine geringere Dicke und zum anderen ein alternatives Material aufweisen. Beispielsweise könnte der Träger aus einem Kunststoff, hingegen die Außenschichten aus einer dünnen Papier- und/oder Pappschicht bestehen.

In einer Ausgestaltung ist der Träger mehrschichtig aufgebaut. Dadurch kann beispielsweise die Aufnehmung als ein Loch in einer ersten Schicht des Trägers ausgebildet sein, wohingegen eine zweite Schicht des Trägers ohne entsprechende Ausnehmung unterhalb der ersten Schicht angeordnet ist. Die Anzahl der Schichten des Trägers sowie die Anzahl der Schichten des Trägers mit Ausnehmung sind nicht beschränkend für diese Erfindung. Die Dicke der einzelnen Schichten des Trägers ist ebenfalls nicht einschränkend für diese Erfindung festgelegt. Dadurch ist der Träger flexibel herstellbar und kann auf unterschiedliche Gegenstände flexibel angepasst werden.

Im Erfindungsgrundgedanken ist weiterhin ein Verfahren zur Herstellung eines flächigen Trägers mit den Verfahrensschritten: Bereitstellen eines flächigen Trägermaterials; Ausformen einer Ausnehmung, wobei die Ausnehmung zumindest so tief wie ein in den flächigen Träger einzubringender Gegenstand ist; und Beschichten des Trägers im Bereich der Ausnehmung mit einer Abdeckung, wobei die Abdeckung die Ausnehmung vollständig abdeckt.

In einer bevorzugten Ausgestaltung umfasst das Verfahren weiter: Das Bereitstellen einer vorderen Außenschicht und einer hinteren Außenschicht einer Transporthülle; das Bereitstellen einer Mittelschicht der Transporthülle; das Anordnen der vorderen Außenschicht auf einer Oberseite der Mittelschicht sowie das Anordnen der hinteren Außenschicht auf einer der Oberseite gegenüberliegenden Unterseite der Mittelschicht, wobei die vordere Außenschicht, die hintere Außenschicht und die Mittelschicht mechanisch verbunden werden. Dabei besteht die Mittelschicht aus einem beweglichen Teilelement und einem unbeweglichen Teilelement, wobei nur das unbewegliche Teilelement der Mittelschicht mit der vorderen Außenschicht und der hinteren Außenschicht verbunden wird und das bewegliche Teilelement der flächige Träger ist.

Eine mechanische Verbindung gemäß der Erfindung ist dabei die Art einen mechanischen Zusammenhalt zu erzeugen. Diese Verbindung ist insbesondere nicht lösbar. Das mechanische Verbinden ist dabei bevorzugt stoffschlüssig. Stoffschlüssige Verbindungen werden alle Verbindungen genannt, bei denen die Verbindungspartner durch atomare oder molekulare Kräfte zusammengehalten werden. Sie sind gleichzeitig nicht lösbare Verbindungen, die sich nur durch Zerstörung der Verbindungsmittel trennen lassen. Insbesondere das Löten, Schweißen, Kleben und Vulkanisieren ist darunter zu verstehen.

Mit unbeweglichem Teilelement ist ein Element der Mittelschicht gemeint, das fest mit anderen Bestandteilen der Transporthülle verbunden ist, wohingegen das bewegliche Teilelement der Träger ist.

Im Schritt des Bereitstellens ist insbesondere auch eine Vorbehandlung inbegriffen. Sollen beispielsweise die Außenschichten Sichtfenster oder Einbuchtungen aufweisen, werden diese Sichtfenster und Einbuchtungen vor dem Anordnen der Schichten in die jeweilige Schicht eingebracht. Insbesondere erfolgt das Vorbehandeln durch Stanzen oder Beschneiden der jeweiligen Schichten.

Eine Vorbehandlung der Mittelschicht ist ebenfalls vor der Bereitstellung der Mittelschicht vorsehbar. Dabei werden vor dem passgenauen Anordnen bereits Führungselemente und Anschlag aus der Mittelschicht ausgestanzt. Insbesondere wird der Träger vom späteren unbeweglichen Teilelement der Mittelschicht getrennt.

Das Vorbehandeln kann weiterhin auch einen Druckschritt beinhalten, sodass die Außenschichten und/oder der Träger bereits bedruckt sind. Das Druckverfahren kann beispielsweise ein Designdruck sein, sodass die entsprechenden Schichten der Transporthülle bzw. des Trägers vor dem Schritt des Anordnens fertig bedruckt sind. Das Druckverfahren kann insbesondere eine optische Personalisierung des Trägers und/oder der Hülle sein, sodass entsprechende Schichten der Transporthülle und/oder des Trägers mit einer eindeutigen Kennzeichnung, die insbesondere den Gegenstand eindeutig kennzeichnet, versehen werden. Derartige Kennzeichnungen können eine Seriennummer des Gegenstands oder Benutzerkenndaten sein, die zur eindeutigen Zuordnung des Gegenstands führen.

Im Fall von SIM als Gegenständen könnten die IMSI und weitere die Teilnehmerkennung des SIM betreffenden Daten den Träger und/oder die Transporthülle gedruckt werden.

Der Schritt des Anordnens der einzelnen Schichten ist insbesondere passgenau, sodass die vordere Außenschichtkontur passgenau über der Mittelschichtkontur und der hinteren Außenschichtkontur angeordnet wird. Auf diese Weise werden die während eines Vorbehandlungsschritts eingebrachten Sichtfenster, Einbuchtungen und Ausnehmungen in den einzelnen Schichten passgenau übereinander angeordnet.

Der Träger und auch die Transporthülle sind bevorzugt aus einem papierartigen Material, insbesondere Karton oder Pappe. Ein Werkstoff wird als Pappe bezeichnet, wenn er ein Flächengewicht von etwa 600 g/m², also ungefähr 1,5 mm Dicke aufweist. Leichtere, bzw. dünnere Materialien heißen Karton.

Durch die Verwendung von Pappe oder Karton als Material ist das mechanische Verbinden mittels Leimen sehr einfach und effizient, auf der anderen Seite ein sehr umweltfreundliches Material als Träger bzw. auch als Transporthülle verwendet wird. Insbesondere ist Karton oder Pappe sehr leicht, im Vergleich zu anderen Materialien. Speziell bei der Verwendung des Trägers und/oder der Transporthülle als Einmalverpackung ist diese Ausgestaltung aufgrund der Umweltverträglichkeit zu bevorzugen.

Alternativ sind Träger und/oder Transporthülle aus einem Kunststoff, insbesondere einem thermoplastischem Kunststoff, wie PVC, PET, PE oder ähnlichem. Hierbei ist es möglich, die mechanische Verbindung mittels eines punktuellen oder seitenweisen Schweißens zu erzielen.

Die Materialien der einzelnen Schichten können darüber hinaus auch unterschiedlich sein, sodass beispielsweise eine Hybridtransporthülle aus mindestes zwei Materialien entsteht. Somit können die Mittelschicht mit dem erfindungsgemäßen Träger aus einem Kunststoff, die Außenschichten und die Abdeckung des Trägers aus Papier hergestellt sein. Das mechanische Verbinden wird dabei mit den für die Stoffverbindung geeigneten Klebemitteln erzielt.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
Figur 1 einen tragbaren Datenträger gemäß Stand der Technik in verschiedenen Formfaktoren.
Figur 2a Etui für einen Datenträger im ID-1 Format gemäß Stand der Technik
Figur 2b einen Datenträger im ID-1 Format gemäß Figur 2a in dem Etui
Figur 3 eine erste erfindungsgemäße Transporthülle mit beweglichem Träger in verschiedenen Ansichten
Figur 4 eine zu Figur 3 weitergebildete erfindungsgemäße Transporthülle
Figur 5 eine zu Figur 3 und 4 alternative erfindungsgemäße Transporthülle
Figur 6 ein skizzierter Schichtenaufbau einer erfindungsgemäßen Transporthülle
Figur 7 ein Querschnitt der Transporthülle gemäß Figur 6 an der Schnittlinie A-A'
Figur 8 ein Querschnitt einer zu Figur 6 alternativen Transporthülle an der Schnittlinie A-A'
Figur 9 ein Querschnitt einer zu Figur 6 alternativen Transporthülle an der Schnittlinie A-A'
Figur 10 ein erfindungsgemäßer Träger für eine Transporthülle
Figur 11 ein zu Figur 10 alternativer Träger für eine Transporthülle
Figur 12 ein zu Figur 10 oder 11 alternativer Träger für eine Transporthülle
Figur 13a eine erfindungsgemäße Mittelschicht mit beweglichem und unbeweglichem Teilelement in einer ersten Endposition
Figur 13b eine erfindungsgemäße Mittelschicht mit beweglichem und unbeweglichem Teilelement in einer zweiten Endposition
Figur 14 eine zu den Figuren 3 bis 5 alternative erfindungsgemäße Transporthülle in zwei Darstellungen
Figur 15 ein zu den Figuren 3 bis 5 und 14 alternativer erfindungsgemäßer Aufbewahrungsbehälter in zwei Darstellungen
Figur 16 ein zu den Figuren 3 bis 5, 14 und 15 alternativer erfindungsgemäßer Aufbewahrungsbehälter in zwei Darstellungen
Figur 17 eine skizzenhafte Darstellung eines erfindungsgemäßen Herstellungsverfahrens einer Transporthülle
Figur 18 eine skizzenhafte Darstellung des erfindungsgemäßen Herstellens der Mittelschicht einer Transporthülle
Figur 19 eine skizzenhafte Darstellung eines erfindungsgemäßen Herstellungsverfahrens einer Vielzahl von Transporthüllen
Figur 20 das erfindungsgemäße Bestücken einer optisch personalisierten Transporthülle mit einem tragbaren Datenträger
Figur 21 eine alternativ optisch personalisierte Transporthülle mit einem tragbaren Datenträger
Figur 22a eine Vorderseite eines alternativen Trägers für eine Transporthülle während des Bestückens mit einem tragbaren Datenträger
Figur 22b ein zu Figur 22a alternativer Träger für eine Transporthülle
Figur 23 eine Querschnittsdarstellung des in Figur 22b gezeigten Trägers
Figur 24 eine Querschnittsdarstellung des in Figur 22a gezeigten Trägers
Figur 25 ein Beispiel zum Versenden einer erfindungsgemäßen Transporthülle

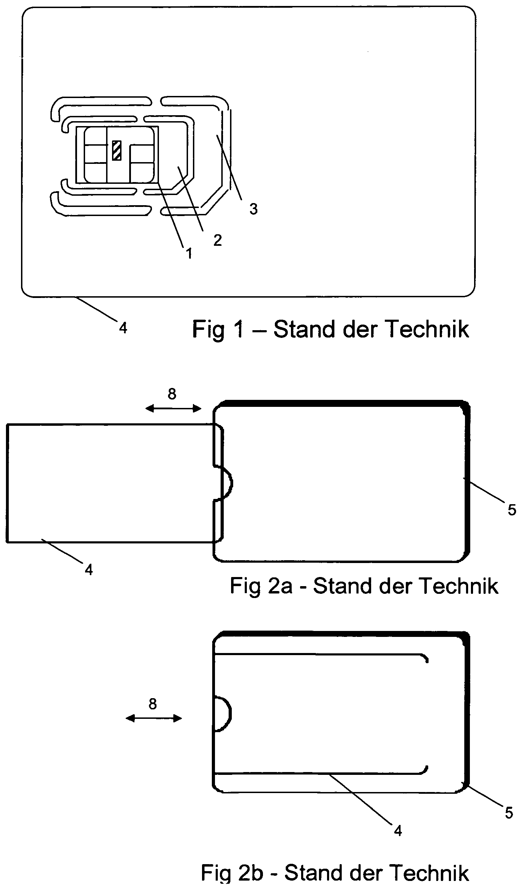

Figur 1 zeigt tragbare Datenträger gemäß Stand der Technik in vier verschiedenen Formfaktoren. Die hier dargestellten Formfaktoren der Datenträger 2, 3 und 4 sind in der ISO/IEC 7816-2 beschrieben. Der Datenträger 4 weist dabei den ID-1 Formfaktor als vierten Formfaktor auf, der mit Abmessungen von 85,725 mm mal 53,975 mm für Kredit- und Debitkarten, Telefonkarten, Krankenversicherungskarte und der gleichen verwendet wird.

Der Datenträger 3 weist den ID-000 Formfaktor auf, der mit Abmessungen von 25mm mal 15mm insbesondere für SIM-Karten verwendet wird. Der Datenträger 2 weist den Mini-UICC, auch ID-3FF Formfaktor auf, der mit Abmessungen von 12 mm mal 15 mm seit neuestem für SIM-Karten verwendet wird. Der Datenträger 1 wiederum weist einen ersten Formfaktor einer möglichen zukünftigen Standardisierung auf. Der als Nano-SIM bezeichnete Formfaktor weist kleinere Außenmaße als der ID-3FF Formfaktor auf.

Zur Auslieferung werden SIM meist in allen Formfaktoren als Datenträger 2, 3 und 4 bereitgestellt. Der Kunde wählt den für sein Endgerät passenden Formfaktor aus und bricht die entsprechende Form aus dem ID-1 Körper aus. Dazu sind die Datenträger 4 und 3 mit Vorstanzungen versehen. Bei immer kleiner werdenden Datenträgern 1 ist es mitunter unmöglich, derartige Formadapter 2, 3, 4 bereitzustellen. Zum einen ist das Risiko, dass der Kunde beim Herausbrechen den Datenträger 1 zerstört sehr groß, zum anderen ist ein sauberes Herausbrechen mitunter nicht möglich, sodass im Randbereich Reste der Stege übrig bleiben. Der Wunsch nach einer alternativen Auslieferung der Datenträger 1 ist daher gegeben.

In Figur 2a ist ein Etui 5 für einen Datenträger 4 gemäß dem Stand der Technik gezeigt. Dieses Etui 5 ist für Datenträger 4 im ID-1 Format geeignet, sodass das Etui 5 selbst größere Außenmaße aufweisen muss, um einen ID-1 Kartenkörper darin aufzunehmen. Das Etui 5 ist dabei dreiseitig geschlossenen. Wie in Figur 2a angedeutet, wird der Datenträger 4 in das Etui 5 eingeführt, indem er durch die vierte (nicht verschlossene) Seite eingesteckt wird.

In Figur 2b ist der Datenträger 4 gemäß Figur 2a in dem Etui 5 vollständig eingebracht, sodass der Datenträger 4 mit seiner Hauptseite vollflächig im Etui untergebracht wird. Die Bewegungsrichtung gemäß Pfeil 8 zeigt, dass der Datenträger 4 in dieses Etui eingesteckt und wieder entnommen werden kann.

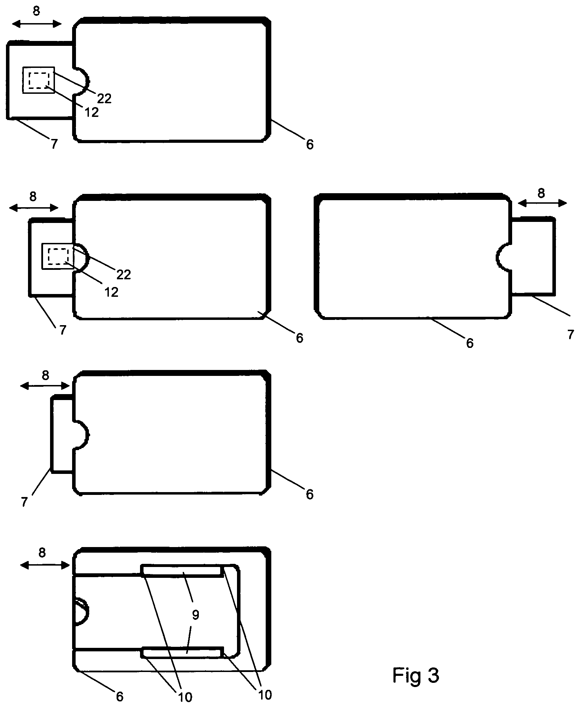

Figur 3 zeigt eine Transporthülle 6 mit einem beweglichen erfindungsgemäßen Träger 7 in verschiedenen Ansichten. Dabei ist die Außenkontur der Hülle 6 in den Abmessungen eines ID-1 Datenträgers 4 gefertigt. Dadurch kann diese Transporthülle 6 wie eine gewöhnliche Chipkarte im ID-1 Format transportiert und verstaut werden. Der bewegliche Träger 7 ist dabei flächig ausgeformt. Der bewegliche Träger 7 lässt sich gemäß der Bewegungsrichtung 8 lateral aus der Transporthülle 6 bewegen. Die Transporthülle 6 gemäß Figur 3 ist dabei dreiseitig geschlossen, wobei der Träger 7 durch die vierte Seite lateral aus der Transporthülle 6 bewegt werden kann. Es ist anhand der Figur 3 erkennbar, dass der Träger 7 vollständig in die Transporthülle 6 eingebracht werden kann, siehe unterste Darstellung. Diese Transporthülle 6 weist einen beweglichen Teil und einen unbeweglichen Teil auf. Der bewegliche Teil der Mittelschicht 62 ist der flächige Träger 7. Der unbewegliche Teil der Mittelschicht 62 ist mechanisch unlösbar mit dem Rest der Transporthülle 6 verbunden. Der flächige Träger 7 weist an seinem Ende zwei Anschläge 10 auf. Entsprechende Anschläge 10 als Gegenstücke der Anschläge 10 sind auch im unbeweglichen Teileelement der Mittelschicht 62 angeordnet. Die Anschläge verhindern, dass der Träger 7 vollständig aus der Transporthülle entnommen werden kann. Weiterhin sind Führungen 9 vorgesehen, um den Träger 7 innerhalb der Bewegungsrichtung 8 zu führen.

Der Träger 7 in der Transporthülle 6 ist dazu vorgesehen, einen beliebigen Gegenstand zu transportieren. Als Gegenstand sind insbesondere tragbare Datenträger 1, aber auch Münzen, Informationsprospekte oder anders geartete Gegenstände denkbar. Liniert dargestellt ist eine Ausnehmung 12 in die der Gegenstand eingebracht wird. Diese Ausnehmung 12 weist Abdeckung 22 auf, die die Ausnehmung 12 vollständig bedeckt.

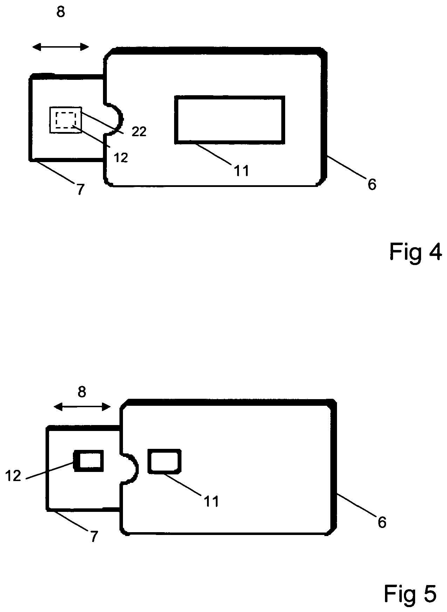

In Figur 4 ist eine zu Figur 3 weitergebildete Transporthülle 6 dargestellt. Im Folgenden wird nur auf die Unterschiede zwischen der Transporthülle 6 der Figur 3 und der Figur 4 eingegangen. Die Transporthülle 6 der Figur 4 weist zusätzlich eine Öffnung 11 in einer Außenschicht 61 der Transporthülle auf. Durch diese Öffnung 11 ist einem Betrachter möglich direkt auf den Träger 7 zu blicken. Somit erkennt der Betrachter, ob sich der Gegenstand, der erfindungsgemäß mit der Transporthülle 6 transportiert werden soll, tatsächlich in der Transporthülle 6 ist. Diese Öffnung 11 ist insbesondere ein ausgestanztes Loch. Alternativ ist denkbar, dass die Öffnung 11 ein Sichtfenster ist, welches einen transparenten Bereich der Außenschicht 61 darstellt.

In Figur 5 ist ein zu Figur 3 und Figur 4 weitergebildeter erfindungsgemäßer Träger 7 in einer Transporthülle 6 dargestellt. Im Folgenden wird nur auf die Unterschiede zwischen dem Träger 7 der Figuren 3 und 4 gegenüber der Figur 5 eingegangen. Der flächige Träger 7 weist hier eine Ausnehmung 12 in Form einer Durchstanzung auf, sodass der Gegenstand 1 von beiden Hauptseiten des flächigen Trägers 7 zu sehen ist. Diese Ausnehmung 12 dient als Aufnahmeelement für einen, mit der Transporthülle 6 zu transportierenden Gegenstand 1. Die Ausnehmung 12 hat dabei insbesondere die Form der Außenkontur des zu transportierenden Gegenstands. Die Ausnehmung 12 ist derart ausgebildet, dass der Gegenstand oberseitenbündig zur Oberfläche des Trägers 7 eingebracht werden kann. Dazu weist die Ausnehmung 12 eine Tiefe auf, die mindestens der Dicke des Gegenstands 1 entspricht.

In Figur 5 ist ebenfalls eine Öffnung 11 dargestellt. Diese Öffnung 11 ist dabei derart in der Außenschicht 61 angeordnet, dass der Gegenstand, der in der Ausnehmung 12 platziert wurde, bei vollständig eingeschobenem Träger 7 für einen Betrachter von außen sichtbar ist.

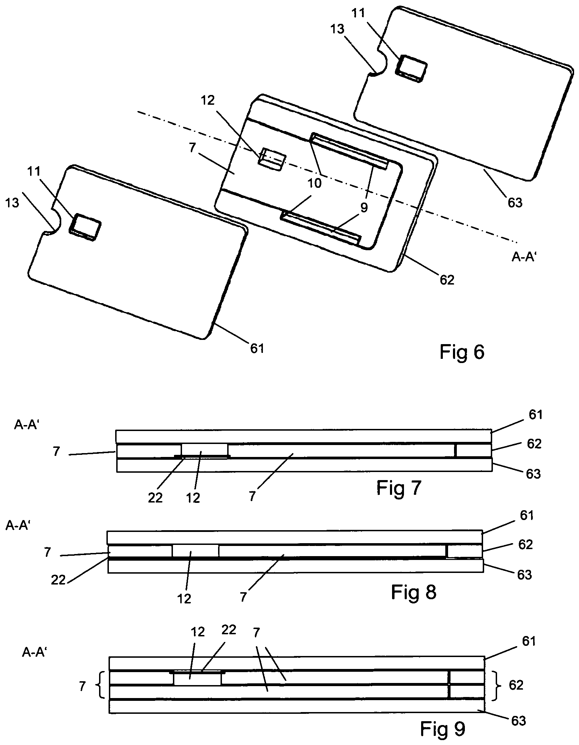

In Figur 6 ist ein skizzierter Schichtenaufbau einer Transporthülle 6 für einen erfindungsgemäßen Träger 7 dargestellt. Wie aus der Figur 6 ersichtlich ist, ist die Transporthülle 6 in diesem Ausführungsbeispiel dreischichtig aufgebaut und weist eine vordere Außenschicht 61, eine Mittelschicht 62 mit dem beweglichen flächigen Träger 7 und eine hintere Außenschicht 63 auf. Die Transporthülle 6 wird demnach aus zwei Außenschichten 61, 63 und einem unbeweglichen Teil einer Mittelschicht 62 gebildet. In diesem Beispiel der Figur 6 weisen alle Schichten die gleiche Schichtdicke auf. Selbstverständlich können in Abhängigkeit des Gegenstands und der Beschränkung der Gesamtdicke der Transporthülle 6 alternative Schichtdicke gewählt werden.

Wie in Figur 6 ersichtlich ist, weist die Mittelschicht 62 das bewegliche Teilelement als flächigen Träger 7 auf. Der Träger 7 ist mit Anschlägen 10 ausgestattet und lässt sich lateral aus der Hülle bewegen, wobei die Führungen 99 die Bewegung derart limitieren, dass die Bewegung in Bewegungsrichtung 8 möglich ist. Der flächige Träger 7 weist gemäß obiger Beschreibung eine Ausnehmung zur Aufnahme eines Gegenstands 1 auf. Die Außenschichten 61 und 63 weisen gemäß obiger Beschreibung ein Sichtfenster 11 auf.

Die Teilelemente der Mittelschicht 62 weisen insbesondere dieselbe Schichtdicke auf. Durch mechanisches Verbinden der Außenschichten 61 und 63 mit dem unbeweglichen Teil der Mittelschicht 62 in der gemäß Figur 6 dargestellten Form ist es möglich, einen Träger 7 beweglich innerhalb der Transporthülle 6 zu erhalten. Dabei kann der Träger 7 entlang der Führung 9 bis zum Anschlag 10 bewegt werden. Einbuchtungen 13 an den Außenschichten 61 und 63 ermöglichen das Greifen des Trägers 7 mit den Fingern, um den Träger 7 bewegen zu können, wenn dieser in der Transporthülle eingeschoben ist.

In Figur 7 ist ein Querschnitt der Transporthülle 6 gemäß Figur 6 an der Schnittlinie A-A' dargestellt. Dabei ist eine Oberseite der Mittelschicht 62 mit einer Oberseite der Außenschicht 61 mechanisch verbunden. Eine der Oberseite der Mittelschicht 62 gegenüberliegende Unterseite der Mittelschicht 62 ist wiederum mit der Außenschicht 63 mechanisch verbunden. Zu beachten ist dabei, dass nur der unbewegliche Teil der Mittelschicht 62 mit den jeweiligen Außenschichten 61 und 63 verbunden ist, wohingegen der Träger 7 als bewegliches Teilelement der Mittelschicht 62 in Bewegungsrichtung 8 lateral bewegen lässt. Dargestellt ist weiterhin das Aufnahmeelement 12 des Trägers, hier als Stanzloch ausgestaltet. Der Träger 7 weist weiterhin eine Abdeckung 22 auf, die das Aufnahmeelement 12 von einer Oberseite des Trägers 7 vollständig abdeckt. Die Abdeckung 22 ist dabei kleiner als die Oberseite des Trägers 7, sodass die Abdeckung den Träger 7 nur partiell abdeckt. Alternativ können auch zwei Abdeckungen 22 vorgesehen werden, wobei die erste Abdeckung 22 das Aufnahmeelement 12 von einer ersten Oberseite abdeckt, währenddessen die zweite Abdeckung 22 das Aufnahmeelement 12 von einer der Oberseite gegenüberliegenden Unterseite des Trägers 7 abdeckt.

In Figur 8 ist ein Querschnitt eines zu Figur 6 alternativen Trägers 7 an der Schnittlinie A-A' dargestellt. Dabei ist an der Unterseite des Trägers 7 eine Abdeckung 22 angeordnet, die die gesamte Oberseite des Trägers 7 bedeckt. Diese Abdeckung 22 ist bevorzugt um ein vielfaches dünner als der Träger 7. Diese Abdeckung 22 verhindert, dass ein in die Ausnehmung 12 eingebrachter Gegenstand beim Bewegen des Trägers 7 lateral aus der Transporthülle 6, aus der Ausnehmung 12 herausfallen kann. Die Abdeckung 22 ist beispielsweise eine Folienschicht oder eine Papierschicht. Alternativ können auch in Figur 8 zwei Abdeckungen 22 vorgesehen werden, wobei die erste Abdeckung 22 das Aufnahmeelement 12 von einer ersten Oberseite abdeckt, währenddessen die zweite Abdeckung 22 das Aufnahmeelement 12 von einer der Oberseite gegenüberliegenden Unterseite des Trägers 7 abdeckt.

In Figur 9 ist ein Querschnitt einer zu Figur 6 alternativen Transporthülle an der Schnittlinie A-A' dargestellt. Hierbei wird die Mittelschicht 62 aus zwei Schichten aufgebaut. Dabei ist die erste Schicht der Mittelschichten 62 mit der Ausnehmung 12 ausgestaltet, wohingegen die zweite Schicht der Mittelschichten 62 keine Ausnehmung 12 aufweist. Durch diese Ausgestaltung der Erfindung wird ebenfalls wie in Figur 8 erreicht, dass der Gegenstand nicht aus dem Träger 7 fällt, wenn der Träger 7 lateral aus der Hülle 6 bewegt wird. Die Abdeckung 22 ist hier ebenfalls zum Abdecken des Aufnahmeelements 12 vorgesehen aber bedeckt nur partiell die Oberseite des Trägers 7.

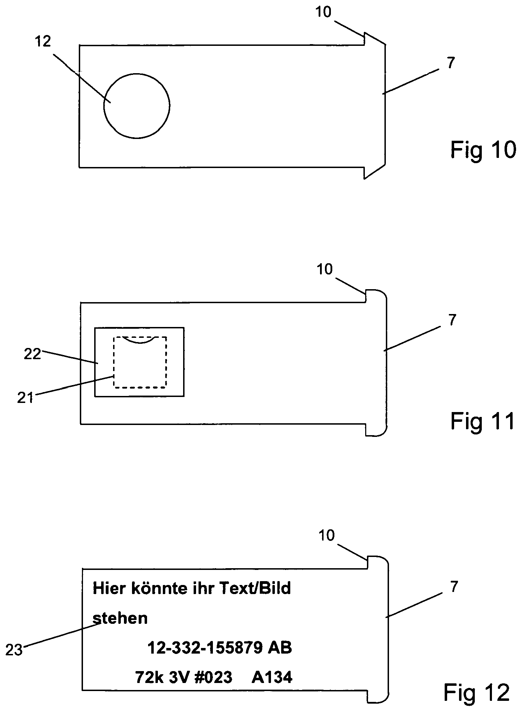

Figur 10 zeigt einen erfindungsgemäßen Träger 7 für eine Transporthülle 6. Der Träger ist mit zwei Anschlägen 10 ausgestaltet, sodass er in Verwendung innerhalb einer erfindungsgemäßen Transporthülle 6 nicht vollständig aus der Transporthülle 6 entnommen werden kann. In dieser Figur ist die Ausnehmung 12 kreisrund ausgestaltet, um beispielsweise eine Geld- oder Wertmünze als Gegenstand aufnehmen zu können. Die Abdeckung 22 ist hier nicht zeichnerisch dargestellt.

In einer Ausgestaltung der Erfindung wird der Träger unabhängig von der Mittelschicht gefertigt und bestückt und erst für Transportzwecke in die Hülle 6 eingebracht. Die Anschläge 10 des Trägers 7 sind dabei derart geformt, dass ein einmaliges vollständiges Einführen des Trägers 7 in die Hülle 6 ermöglicht ist, allerdings die Anschläge 10 ein vollständiges Herausnehmen des Trägers 7 aus der Hülle 6 verhindern. Dazu sind die Anschläge beispielsweise wie in Figur 10 gezeigt ausgeformt.

Figur 11 zeigt ein zu Figur 10 alternativen Träger 7 für eine Transporthülle 6. Der Träger 7 der Figur 11 weist eine zeichnerisch nicht dargestellte Ausnehmung 12. Im Bereich der Ausnehmung 12 ist eine Abdeckung 22 vorgesehen. Die Abdeckung 22 ist von einer Perforation 21 umrandet, sodass eine Abziehlasche erhalten wird. Durch die Perforation 21 der dünnen Schicht ist es einem Benutzer möglich, mittels eines Werkzeugs oder seines Fingernagels, die Abdeckung 22 entlang der Perforation 21 zu teilen und zu entfernen, wodurch der in der Ausnehmung 12 eingebrachte Gegenstand 1 aus dem Träger 7 herausgenommen werden kann.

Die Perforation im drucktechnischen Sinn ist eine Schlitz- und Lochstanzung in der dünnen Schicht, beispielsweise aus Papier oder Karton zum Abtrennen der Abdeckung 22. Eine Perforation lässt sich in Perforiermaschinen, in Endlosdruckmaschinen, in Buchdruckmaschinen herstellen. Auch in Offsetdruckmaschinen können Perforationen hergestellt werden, indem man die Perforationslinien 21 auf den Gegendruckzylinder klebt und das Gummituch als Gegenform verwendet.

In Figur 12 ist ein zu Figur 10 oder 11 alternativer Träger 7 für eine Transporthülle 6 dargestellt. Der Träger 7 ist hier in einem Druckschritt bedruckt worden. Insbesondere ist die Bedruckung eine optische Personalisierung 23 des Trägers 7. Wenn insbesondere SIM als Gegenstände in die Transporthülle 6 eingebracht werden, könnten die Träger 7 mit einer zu der SIM gehörigen eindeutigen Kennung, beispielsweise der IMSI, der ICCID, der MSISDN und dergleichen bedruckt werden. Alternativ kann der Träger 7 mit jeder Form von Information bedruckt sein und ggf. als ein Werbeinformationsprospekt verwendet werden.

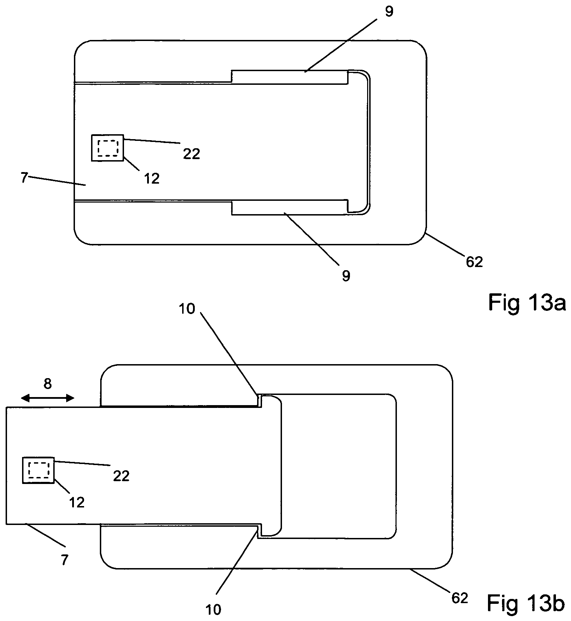

Figur 13a zeigt eine erfindungsgemäße Mittelschicht 62 mit einem beweglichen Teilelement und einem unbeweglichem Teilelement in einer ersten Endposition. Wie eingangs beschrieben, wird die Mittelschicht 62 insbesondere aus einem Stück herausgestanzt, wobei in Figur 13a die gestanzte Mittelschicht 62 dargestellt ist. Diese Mittelschicht 62 hat einen u-förmigen Außenrand, der in der gesamten Anmeldung als unbewegliches Teilelement der Mittelschicht 62 bezeichnet wird. Dieses U-förmige Teilelement der Mittelschicht 62 wird mechanisch mit den hier nicht dargestellten Außenschichten 61, 63 verbunden. Diese Verbindung ist mechanisch nicht lösbar, sodass das unbewegliche Teilelement der Mittelschicht 62 nicht bewegt werden kann. Weiterhin ist der flächige Träger 7 dargestellt, der in der gesamten Anmeldung als bewegliches Teilelement der Mittelschicht 62 bezeichnet wird. Das U-förmige Teilelement der Mittelschicht 62 weist zwei Ausbuchtungen im inneren auf, die als Führung 9 gekennzeichnet sind. Diese Führungen 9 dienen dazu den beweglichen Teil der Mittelschicht 62 in vordefiniertem Rahmen zu bewegen. Gemäß Figur 13a ist der Träger 7 in einer ersten Endposition gezeigt, in der der Träger 7 vollständig in der Transporthülle 6 eingeschoben ist.

In Figur 13b ist die erfindungsgemäße Mittelschicht 62 mit beweglichem und unbeweglichem Teilelement in einer zweiten Endposition dargestellt. Im Unterschied zu Figur 13a ist in Figur 13b der Träger 7 in eine zweite Endposition bewegt worden. Dazu weist der Träger 7 zwei Anschläge 10 auf, die an die Enden der Führungen 9 stoßen. Der Träger 7 kann somit nicht über diese zweite Endposition hinaus aus der Transporthülle 6 bewegt werden.

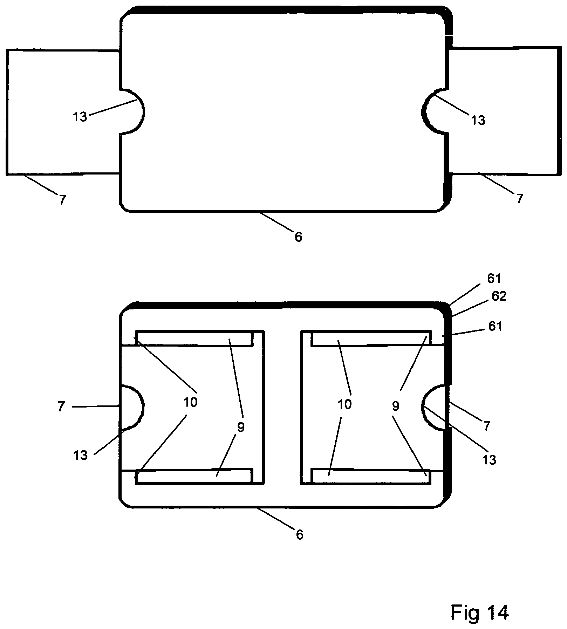

In den Figuren 13a und 13b sind nur andeutungsweise die Ausnehmung 12 und die Abdeckung 22 dargestellt. In den Figuren 14 bis 19 wurden Ausnehmung 12 und Abdeckung 22 zur Vereinfachung weggelassen, wobei diese für jede dargestellte Ausführungsform vorhanden sind.

In Figur 14 ist eine zu den Figuren 3 bis 5 alternative erfindungsgemäße Transporthülle in zwei Darstellungen gezeigt. Wesentlicher Unterschied zu den vorangegangen Ausführungsbeispiel ist, dass zwei Träger 7 in der Transporthülle 6 vorgesehen sind. Dadurch können nunmehr 2 Gegenstände in einer Transporthülle 6 untergebracht und sicher transportiert werden. Die Hülle ist an zwei Seiten geschlossen. Die Hülle 6 hat in diesem Fall ebenfalls das Format gemäß ISO/IEC 7816-2 ID-1 Standard. In der unteren Darstellung ist gezeigt, dass in dieser Ausführung jeweils 2 Führungen 9 sowie zwei Anschläge 10 pro Träger 7 vorgesehen sind. Die Einbuchtungen 13 sind hier respektive an beiden Seiten ausgestaltet.

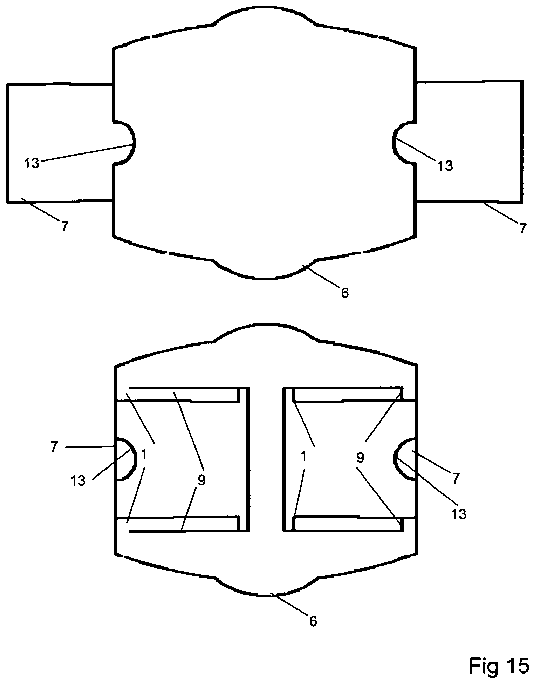

In Figur 15 ist ein zu den Figuren 3 bis 5 und 14 alternativer erfindungsgemäßer Aufbewahrungsbehälter 14 in zwei Darstellungen gezeigt. Der einzige Unterschied zur Figur 14 ist die alternative Formgebung des Behälters 14 selbst, der nicht dem ID-1 Format entspricht.

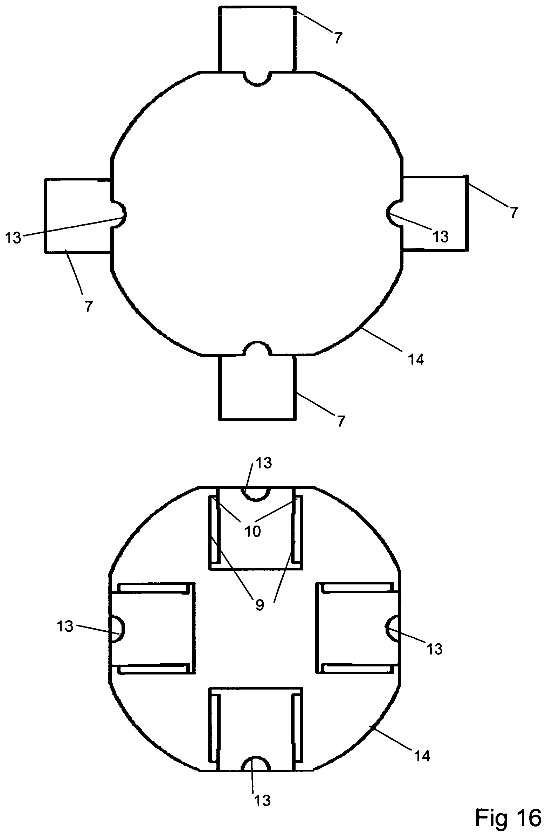

In Figur 16 ist ein zu den Figuren 3, 4, 5, 14 und 15 alternativer erfindungsgemäßer Aufbewahrungsbehälter 14 in zwei Darstellungen gezeigt. Im Unterschied zu den Figuren 14 und 15 sind hier nicht zwei Träger 7, sondern vier Träger 7 dargestellt. Jeder Träger 7 lässt sich lateral zu einer Seite aus dem Behälter 14 bewegen. Jeder Träger 7 weist eine entsprechende Führung 10 sowie einen Anschlag 9 auf. Mit der in Figur 16 gezeigten Ausführung können bis zu vier Gegenstände in einem Behälter 14 untergebracht sein.

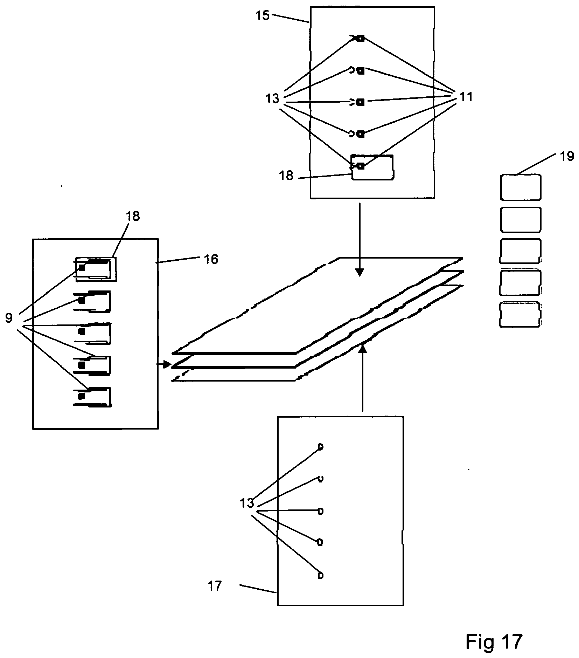

In Figur 17 ist eine skizzenhafte Darstellung eines erfindungsgemäßen Herstellungsverfahrens eines Trägers 7 mit entsprechender Transporthülle 6 dargestellt. Wie hier zu erkennen ist, werden die Transporthüllen 6 nicht einzeln hergestellt, sondern in einer Vielzahl gleichzeitig produziert. Dazu werden die einzelnen Schichten 61, 62 und 63 auf Herstellungsträgern 15, 16 und 17 angeordnet.

Auf dem Herstellungsträger 15 sind fünf vordere Außenschichten 61 bereitgestellt. Andeutungsweise ist die spätere Form 18 der Transporthülle 6 dargestellt. Zur Bereitstellung der vorderen Außenschicht 61 sind insbesondere die Einbuchtungen 13 und die Sichtfenster 11 in einem Stanzschritt ausgestanzt worden.

Auf dem Herstellungsträger 16 sind fünf Mittelschichten 62 bereitgestellt. Andeutungsweise ist die spätere Form 18 der Transporthülle 6 dargestellt. Zur Bereitstellung der Mittelschichten 62 sind insbesondere die bewegliche Teilelemente (also die späteren Träger 7) und die unbeweglichen Teilelemente (die U-förmigen Elemente) der Mittelschicht 62 mit den entsprechenden Führungen 10 sowie Anschlägen 9 vorgestanzt. Zusätzlich sind die Ausnehmungen 12 vorgestanzt. Alle Stanzungen betreffend die Mittelschicht 62 können in einem Stanzvorgang vorgenommen werden. Wie hier gut zu erkennen ist, ist die Mittelschicht zu diesem Zeitpunkt noch einstückig.

Auf dem Herstellungsträger 17 sind fünf hintere Außenschichten 63 bereitgestellt. Zur Bereitstellung der hinteren Außenschicht 63 sind insbesondere die Einbuchtungen 13 in einem Stanzschritt ausgestanzt worden.

Vor dem Schritt des passgenauen Anordnens werden die einzelnen Schichten bedruckt Dabei wird ein Designdruck auf die sichtbaren Oberseiten der Außenschichten 61 und 63 sowie gegebenenfalls auf den Träger 7 aufgetragen. Alternativ oder zusätzlich erfolgt eine optische Personalisierung der Hülle 6 auf einer Außenschicht 61 oder 63 bzw. auf dem Träger 7. Die optische Personalisierung dient dazu, die jeweilige Transporthülle 6 mit dem darin zu transportierenden Gegenstand zu verknüpfen, sodass beispielsweise eine eindeutige Kennung des Gegenstands auch auf der Hülle 6 gedruckt wird.

In einem Folgeschritt werden die bereitgestellten Herstellungsträger nun übereinander angeordnet. Dies geschieht passgenau, sodass die einzelnen Schichten der Transportschicht derart übereinander angeordnet werden, dass die Einbuchtungen, Ausnehmungen und Sichtfenster der jeweiligen Schichten passend übereinander liegen. Zu der passgenauen Überlagerung der drei Schichten können auf den Herstellungsträgern Markierungen oder Halterungen vorgesehen sein, um die einzelnen Schichten passgenau auszurichten.

In einem nicht dargestellten Folgeschritt wird die Mittelschicht 62 an den Stellen der unbeweglichen U-förmigen Teilelemente beidseitig mit einem Bindemittel oder einem Klebemittel beschichtet. Sind die Herstellungsträger aus einem papierartigen Material, ist das Klebemittel insbesondere ein Leim. Das teilweise beidseitige Beschichten des Herstellungsträgers 16 wird beispielsweise mit einer Fasson-Leim-Maschine durchgeführt.

In einem Folgeschritt werden die einzelnen Transporthüllen aus den überlagerten Herstellungsträgern herausgestanzt und sind somit vereinzelt. Dies ist anhand der mit 19 gekennzeichneten Transporthüllen dargestellt. Durch die Stanzung wird insbesondere in der Mittelschicht 62 das bewegliche Teileelement, also der flächige Träger 7 vom u-förmigen unbeweglichen Teilelement getrennt.

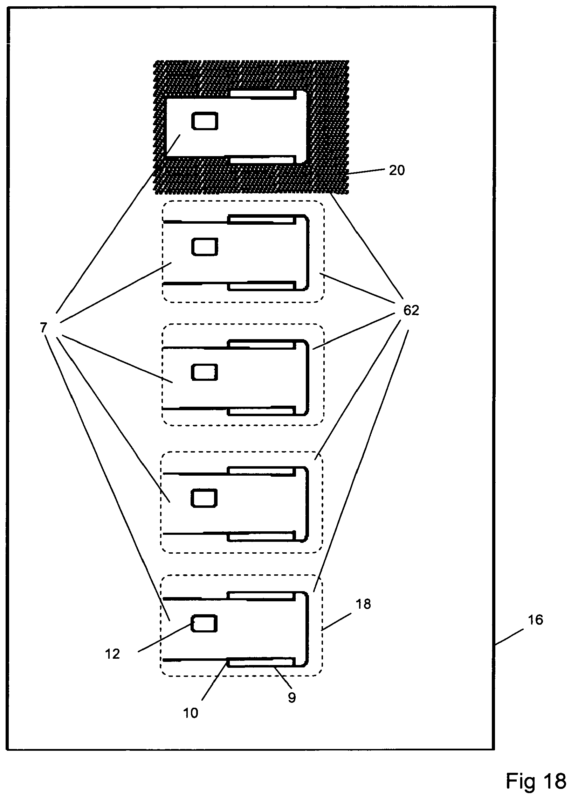

In Figur 18 ist eine skizzenhafte Darstellung des Beschichtens einer Oberseite des Herstellungsträgers 16 für fünf Mittelschichten 62 der Transporthülle 6 dargestellt. Die spätere Form 18 der Transporthülle 6 ist andeutungsweise gezeichnet. Der gezeichnete Bereich 20 wird dabei mit einem leimartigen Mittel beschichtet. Dabei sind zwei Dinge zu beachten. Zum einen darf das leimartige Mittel nicht au den beweglichen Teil der Mittelschicht 62 aufgetragen werden. Wenn dies nicht beachtet wird, wird auch der spätere Träger 7 mit den Außenschichten 61 oder 63 verklebt, wodurch der Träger nicht mehr beweglich ist. Zum anderen sollte die Beschichtung mit dem leimartigen Mittel auch außerhalb der späteren Form 18 der Transporthülle 6 erfolgen, sodass der Randbereich der Transporthülle 6 ordnungsgemäß verklebt wird und es nicht zu einer Delamination während des finalen Stanzens kommt. Zum Zeitpunkt der Beleimung sollte der Herstellungsträger 16 bereits vorgestanzt und mit den Ausnehmungen 12 versehen sein.

Auf diese beschichtete Oberseite wird nun im Folgeschritt die entsprechende Außenschicht 61 passgenau angeordnet. Danach wird die Unterseite der Mittelschicht mit dem leimartigen Mittel auf die gleiche Weise beschichtet und die entsprechende Außenschicht 63 auf die Unterseite der Mittelschicht 62 passgenau angeordnet.

Zur Verbesserung der mechanischen Verbindung kann nun ein Pressschritt erfolgen, wobei der dreischichtige Schichtaufbau zusammengepresst wird.

Alternativ ist die Beschichtung ein wärmeaktivierbares Klebemittel, sodass mittels Wärmeeinfuhr auf den Schichtaufbau die mechanische Verbindung hergestellt wird.

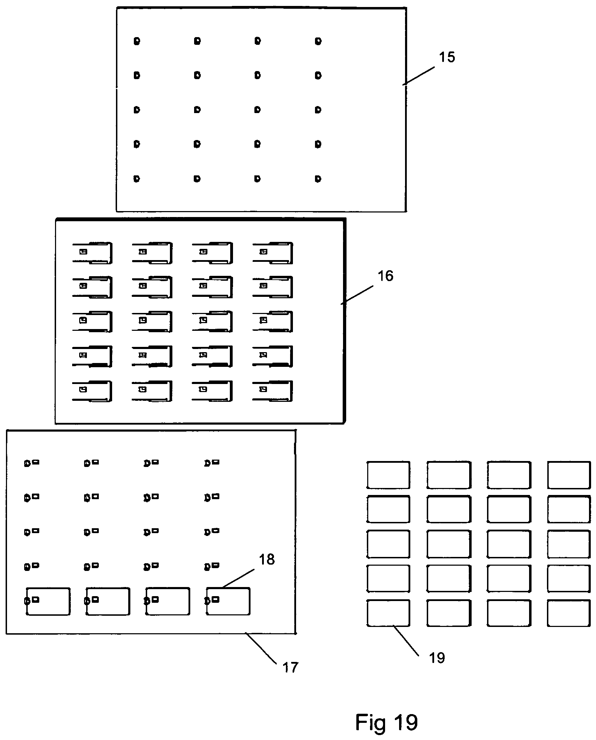

In Figur 19 ist eine skizzenhafte Darstellung eines erfindungsgemäßen Herstellungsverfahrens mit einer Vielzahl von Transporthüllen dargestellt. Das Verfahren verläuft prinzipiell genau so wie das Verfahren gemäß Figur 17 und entsprechender Beschreibung. Im Unterschied zu Figur 17 sind die einzelnen Herstellungsträger 15, 16 oder 17 für die jeweilige Schicht 61, 62 oder 63 nicht für nur fünf Transporthüllen 6 ausgelegt, sondern es können zwanzig Transporthüllen gleichzeitig hergestellt werden.

Natürlich ist die Anzahl der Transporthüllen6 pro Herstellungsträger 15, 16, 17 nicht beschränkend für den Erfindungsgrundgedanken.

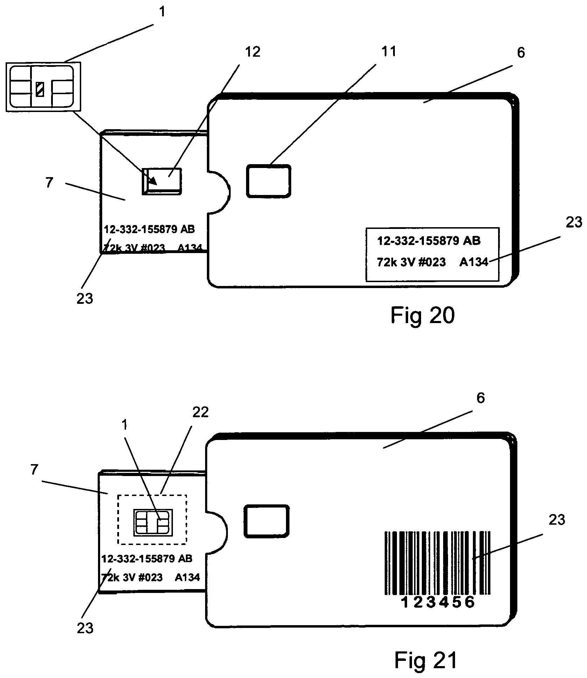

In Figur 20 wird nun das erfindungsgemäße Bestücken eines optisch personalisierten Trägers 7 in einer Transporthülle 6 mit einem tragbaren Datenträger 1 gezeigt. In diesem Beispiel wird die Transporthülle 3 bereits fertig gestellt und anschließend der Gegenstand eingebracht. Dazu wird der Träger 7 bis zum Anschlag 10 aus der Transporthülle 6 bewegt und der Gegenstand in die Ausnehmung 12 eingebracht. In Figur 20 ist der Gegenstand ein SIM 1 in einem der Formfaktoren ID-000, ID-3FF oder ID-4FF. Die eindeutige Kennung der SIM, beispielsweise die IMSI, die ICCID, MSISDN etc. sind bereits auf der Transporthülle 6 als optische Personalisierung 23 aufgedruckt. Anschließend wird die Abdeckung 22 in Form eines Aufklebers mit oder ohne Perforation 21 über die Ausnehmung 12 geklebt.
Die optische Personalisierung des Trägers 7 erfolgt in einem alternativen Verfahren nicht als Bedruckung sondern als Aufkleber, wobei der Aufkleber die optischen Personalisierungsdaten beinhaltet und gleichzeitig die Abdeckung 22 darstellt.

In Figur 21 ist ein zur Figur 20 alternativ optisch personalisierte Transporthülle dargestellt. Der Unterschied zur Figur 20 ist auf die Art der optischen Personalisierung 23 der Hülle 6 zurückzuführen, die entgegen der Figur 20 in der Figur 21 maschinenlesbar ist. Das kann zum einen ein aufgedruckter 1D oder 2D Barcode sein, der eine eindeutige Kennung bezüglich des zu bestückenden Gegenstands aufweist.

Die Bestückung und optische sowie technische Personalisierung wird nun anhand von vier denkbaren Varianten beschrieben wird.

Der SIM 1 ist zum Zeitpunkt der Bestückung in einer ersten Variante noch unpersonalisiert, wohingegen die Transporthülle 6 bereits optisch personalisiert ist. Nachdem der Datenträger 1 in die Ausnehmung 12 platziert wurde, werden die optische Personalisierungsdaten 23 von einer Personalisierungseinrichtung maschinell ausgelesen. Die Personalisierungseinrichtung erhält durch die eingelesenen optischen Personalisierungsdaten 23 eine eindeutige Kennung, die angeben, welche elektrischen Personalisierungsdaten auf den Datenträger 1 zu übertragen sind. Dies kann beispielsweise durch einen an die Personalisierungseinrichtung angeschlossenen Datenserver abgefragt werden. Die Personalisierungseinrichtung kontaktiert nun die Kontaktflächen des Datenträgers 1 entweder durch die Öffnung 11 in der Außenschicht 61 oder direkt auf dem Träger 7, wenn dieser in der entsprechenden Position gemäß Figur 20 oder 21 verbleibt. Nach erfolgreicher Kontaktierung werden die elektrischen Personalisierungsdaten auf den Datenträger gespielt. Anschließend wird die Abdeckung 22 mit oder ohne Perforation 21 in Form eines Aufklebers über die Ausnehmung 12 angeordnet.

Alternativ ist der SIM 1 zum Zeitpunkt der Bestückung in einer zweiten Variante bereits elektrisch personalisiert, wobei die optischen Personalisierungsdaten mit den auf der Transporthülle 6 dargestellten optischen Personalisierungsdaten 23 korrespondieren. In diesem Fall überprüft die Personalisierungseinrichtung durch maschinelles Einlesen der optischen Personalisierungsdaten 23 und durch Kontaktieren und Auslesen der elektrischen Personalisierungsdaten des Datenträgers, ob die optischen Personalisierungsdaten mit den elektrischen Personalisierungsdaten übereinstimmen. Bei fehlender Übereinstimmung wird der Datenträger 1 mit Hülle aussortiert. Anschließend wird die Abdeckung 22 mit oder ohne Perforation 21 in Form eines Aufklebers über die Ausnehmung 12 angeordnet.

Alternativ ist der SIM 1 zum Zeitpunkt der Bestückung in einer dritten Variante bereits personalisiert, wobei auf der Hülle 6 noch keine optischen Personalisierungsdaten 23 aufgedruckt sind. In diesem Fall wird der Datenträger 1 ebenfalls von der Personalisierungseinrichtung kontaktiert und elektrisch ausgelesen. Die Daten werden verwendet, um einer nachgeschalteten optischen Personalisierungseinrichtung, beispielsweise einer Bedruckungseinrichtung, eine eindeutige Kennung bereitzustellen, die auf die Transporthülle 6 bzw. den Träger 7 gedruckt werden soll. Anschließend wird die Abdeckung 22 mit oder ohne Perforation 21 in Form eines Aufklebers über die Ausnehmung 12 angeordnet.

Alternativ ist der SIM 1 zum Zeitpunkt der Bestückung in einer vierten Variante unpersonalisiert und auch auf der Hülle 6 sind noch keine optischen Personalisierungsdaten 23 aufgedruckt. In diesem Fall erfolgen die optische und die elektrische Personalisierung in einem nachgelagerten Schritt durch eine Personalisierungseinrichtung. Nach der optischen und elektrischen Personalisierung wird die Abdeckung 22 mit oder ohne Perforation 21 in Form eines Aufklebers über die Ausnehmung 12 angeordnet.

Für die Bestückung kann der Träger 7 auch noch auf dem Herstellungsträger 16 sein, sodass die Bestückung der Transporthüllen 6 vor dem Ausstanz- und Vereinzelungsschritt erfolgt. Für das Anordnen der Abdeckung 22 mit oder ohne Perforation 21 kann der Träger 7 ebenfalls noch auf dem Herstellungsträger 16 sein.

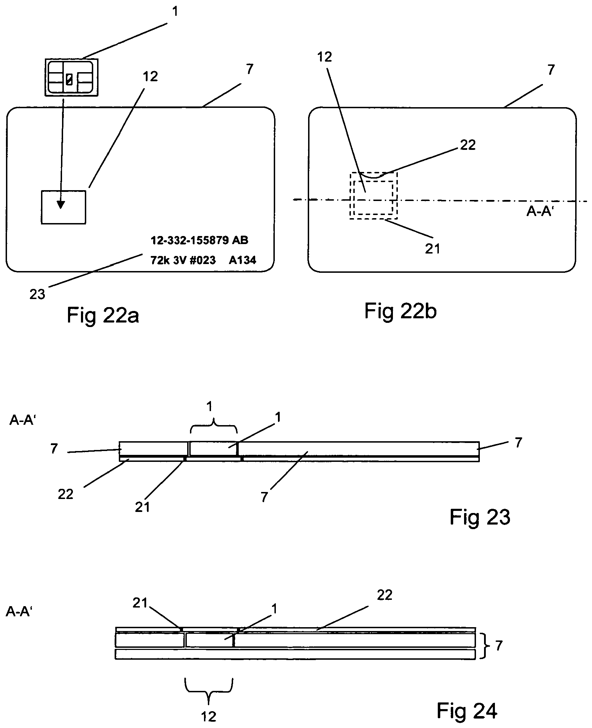

In Figur 22a ist eine Vorderseite eines alternativen Trägers 7 für eine Transporthülle 6 während des Bestückens mit einem Gegenstand 1 dargestellt. Der Träger 7 weist dazu eine Ausnehmung 12 auf, in die der Gegenstand oberflächenbündig eingebracht wird. Beispielsweise weist der Träger die ID-1 Formatform gemäß ISO/IEC 7816-2 auf. Alternative Formen sind vom Erfindungsgedanken nicht ausgeschlossen. Der Träger 7 ist entsprechend optisch personalisiert oder wird in einem Folgeschritt mit den optischen Personalisierungsdaten 23 bedruckt. In einem Folgeschritt wird im Bereich der Ausnehmung 12 eine perforierte Abdeckung 22 angeordnet. Der Benutzer entfernt die Abdeckung 22 entlang der Perforation 21, sobald er den Gegenstand 1 entnehmen möchte. Die Entnahme des Gegenstands 1 ist nur an einer Oberseite des Trägers 7 möglich. In diesem Fall ist die Ausnehmung eine Kavität bzw. eine Aushöhlung in dem Träger 7.

In Figur 22b ist ein zu Figur 22a alternativer Trägers 7 gezeigt. Hier ist die Ausnehmung 12 der Figur 22b ein Loch, welches durch den Träger 7 hindurchgeht. Dabei ist die Rückseite des Trägers 7 mit einer Abdeckung, die vollflächig auf der Trägerrückseite angeordnet ist, ausgestaltet. Die Abdeckung 22 weist im Bereich der Ausnehmung 12 eine Perforation 21 auf. In dieser Variante zieht der Benutzer die Abdeckung 22 entlang der Perforation 21 ab und drückt den Gegenstand 1 aus dem Träger 7 hinaus. Diese Entnahme des Gegenstands 1 ist von beiden Oberseiten des Trägers 7 möglich.

In Figur 23 ist eine Darstellung des Querschnitts anhand der Schnittlinie A-A' des in Figur 22b gezeigten Trägers 7 zu sehen. Hier ist der Träger 7 mehrschichtig ausgebildet, wobei eine Schicht die Abdeckung 22 ist, also eine dünnwandige Schicht, beispielsweise aus einem papierartigen Material. Diese Abdeckung 22 weist eine Perforation 21 auf, mit deren Hilfe der Gegenstand 1 entnommen werden kann. In einer bevorzugten Variante ist der Träger 7 ein gemäß der Figuren 10 bis 12 gezeigten Art und wird als bewegliches Teilelement in einer Mittelschicht gemäß Figur 6 angeordnet.

In Figur 24 ist eine Querschnittsdarstellung des in Figur 22a gezeigten Trägers anhand der Schnittlinie A-A' abgebildet. Hierbei ist die Mittelschicht mehrschichtig ausgebildet. Der Träger 7 weist somit eine Ausnehmung 12 auf, die nicht komplett durch den Träger 7 verläuft, sodass der Gegenstand 1 nur von einer Oberseite des Trägers 7 entnommen werden kann. Oberhalb der Ausnehmung 12 ist wiederum zumindest im Bereich der Ausnehmung 12 die Abdeckung 22 angeordnet, welche eine Perforation 21 aufweist.

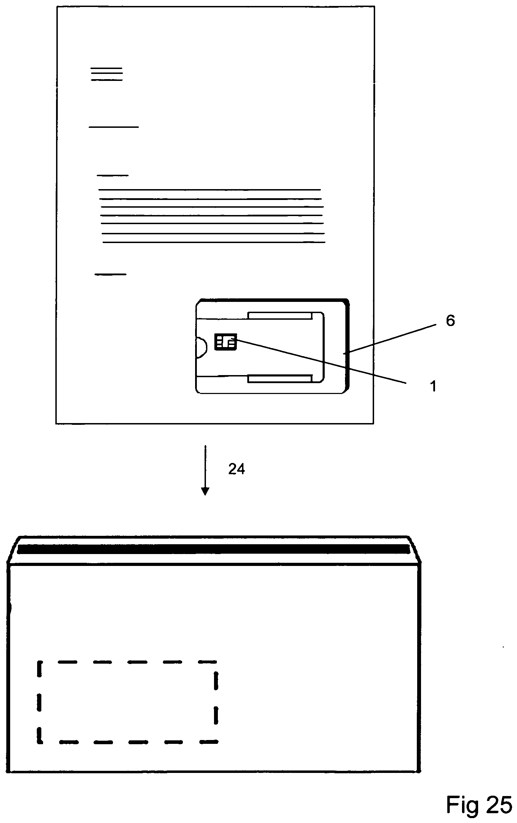

In Figur 25 ist ein Beispiel zum Versenden eines erfindungsgemäßen Trägers 7 gezeigt. Insbesondere kann der Träger 7 - auch mit einer Transporthülle 6 - auf ein Begleitschreiben in DIN A4 mechanisch lösbar angeordnet sein. In dem Träger 7 befindet sich der eingebrachte Gegenstand 1. In einem abschließenden Verpackungsschritt 24 wird das Begleitschreiben mit Träger 7 in einen entsprechenden Briefumschlag verpackt und zum Versand zugeklebt.

### Bezugszeichenliste

- 1: Datenträger in einem ersten Formfaktor
- 2: Datenträger in einem zweiten Formfaktor
- 3: Datenträger in einem dritten Formfaktor
- 4: Datenträger in einem vierten Formfaktor
- 5: Etui für einen Datenträger
- 6: Hülle in einem Datenträger-Formfaktor
61 Vordere Außenschicht der Hülle
62 Mittelschicht der Hülle, ggf. mehrschichtig
63 Hintere Außenschicht der Hülle
- 7: Flächiger Träger
- 8: Bewegungsrichtung des Trägers
- 9: Führung
- 10: Anschlag
- 11: Sichtfenster, Öffnung
- 12: Aufnahmeelement mit Ausnehmung
- 13: Einbuchtung
- 14: Transport- bzw. Aufbewahrungs- bzw. Verpackungsbehälter
- 15: Herstellungsträger für vorderes Außenteil
- 16: Herstellungsträger für Mittelteil
- 17: Herstellungsträger für hinteres Außenteil
- 18: Spätere Form der Transporthülle
- 19: Verklebter und ausgestanzter Träger mit Hülle
- 20: Bereich der Verklebung
- 21: Perforationslinie
- 22: Abdeckung, Abziehlasche
- 23: optische Personalisierung bzw. Druck
- 24: Versende- und Verpackschritt

## Patentansprüche

1. Flächiger Träger (7), wobei der Träger (7) ein Aufnahmeelement zur Aufnahme eines Gegenstands (1) aufweist und dieses Aufnahmeelement in Form einer Ausnehmung (12) ausgestaltet ist und wobei die Ausnehmung (12) den Gegenstand (1) vollständig aufnimmt,
wobei der Träger (7) zumindest im Bereich der Ausnehmung (12) eine schichtförmige Abdeckung (22) zum vollflächigen Abdecken der Ausnehmung (12) aufweist,
wobei der Gegenstand (1) ein tragbarer Datenträger in einem ersten Formfaktor (1) gemäß ISO/IEC 7816-2 ist und der Träger (7) ein Formadapter für einen tragbaren Datenträger in einem zweiten, vom ersten Formfaktor (1) verschiedenen Formfaktor (4) gemäß ISO/IEC 7816-2 ist
**dadurch gekennzeichnet, dass** der Träger (7) weiterhin Vorausstanzungen gemäß ISO/IEC 7816-2 außerhalb der Aufnehmung (12) aufweist, sodass der Träger (7) durch die Vorstanzungen teilbar ist, wodurch der Träger (7) nach dem Teilen einen dritten Formfaktor (2, 3) gemäß ISO/IEC 7816-2 aufweist, der kleiner als der zweite Formfaktor (4) aber größer als der erste Formfaktor (1) ist, sodass der jeweilige Formfaktor (2, 3, 4) aufgrund der Vorstanzungen aus dem Träger (7) ausbrechbar ist,
wobei der Formfaktor (4) des Trägers (7) kleiner ist als eine Transporthülle (6),
wobei der Träger (7) innerhalb der Transporthülle (6) beweglich angeordnet ist,
wobei die Transporthülle (6) die Abmessungen eines ID 1 Datenträgers gemäß ISO/IEC 7816-2 aufweist,
wobei der Träger (7) vollständig in eine Transporthülle (6) eingebracht wird, wobei die Transporthülle (6) eine vordere Außenschicht (61) und eine hintere Außenschicht (63) aufweist,
wobei der Träger (7) als beweglicher Teil in einer Mittelschicht (62) zwischen der vorderen Außenschicht (61) und der hinteren Außenschicht (63) in der Transporthülle (6) angeordnet ist und der unbewegliche Teil der Mittelschicht (62) mechanisch unlösbar mit der vorderen Außenschicht (61) und der hinteren Außenschicht (63) verbunden ist und wobei der flächige Träger (7) von außerhalb der Transporthülle (6) zugänglich ist und bewegt werden kann.

2. Flächiger Träger (7) gemäß Anspruch 1, wobei der Träger (7) eine Dicke gleich oder größer einer Dicke des Gegenstands (1) aufweist, sodass der Gegenstand oberseitenbündig im Träger (7) aufgenommen ist.

3. Flächiger Träger (7) gemäß einem der vorhergehenden Ansprüche, wobei auf der Abdeckung (22) eine Perforation (21) ausgebildet ist.

4. Flächiger Träger (7) nach einem der vorhergehenden Ansprüche, wobei die Abdeckung (22) vollflächig auf einer Oberseite des Trägers (7) ausgebildet ist.

5. Flächiger Träger (7) nach einem der vorhergehenden Ansprüche, wobei die Abdeckung (22) aus einem papierartigen Material ist.

6. Flächiger Träger (7) nach einem der vorhergehenden Ansprüche, wobei die Ausnehmung (12) eine Durchstanzung des Trägers (7) ist und die Abdeckung (22) auf mindestens einer Oberseite des Trägers (7) ausgebildet ist.

7. Verfahren zur Herstellung eines flächigen Trägers (7) gemäß einer der vorhergehenden Ansprüche 1 bis 6 mit den Verfahrensschritten:
- Bereitstellen eines flächigen Trägermaterials;
- Ausformen einer Ausnehmung (12), wobei die Ausnehmung (12) zumindest so tief wie ein in den flächigen Träger (7) einzubringender Gegenstand (1) ist;
**dadurch gekennzeichnet, dass:**
- der Träger (7) im Bereich der Ausnehmung (12) mit einer Abdeckung (22) beschichtet wird, wobei die Abdeckung (22) die Ausnehmung (12) vollständig abdeckt,
wobei die Ausnehmung (12) vor dem Beschichten aus dem Träger (7) ausgestanzt wird,
wobei das Verfahren weiter umfasst:
- Bereitstellen einer vorderen Außenschicht (61) und einer hinteren Außenschicht (63) einer Transporthülle (6)
- Bereitstellen einer Mittelschicht (62) der Transporthülle (6);
- Anordnen der vorderen Außenschicht (61) auf einer Oberseite der Mittelschicht (62) sowie Anordnen der hinteren Außenschicht (63) auf einer der Oberseite gegenüberliegenden Unterseite der Mittelschicht (62), wobei die vordere Außenschicht (61), die hintere Außenschicht (63) und die Mittelschicht (62) mechanisch verbunden werden,
wobei die Mittelschicht (62) aus einem beweglichen Teilelement und einem unbeweglichen Teilelement besteht, wobei nur das unbewegliche Teilelement der Mittelschicht (62) mit der vorderen Außenschicht (61) und der hinteren Außenschicht (63) verbunden wird und das bewegliche Teilelement der flächige Träger (7) ist.

8. Verfahren nach Anspruch 7, wobei auf der Abdeckung (22) eine Perforation (21) ausgebildet wird.

## Claims

1. A planar carrier (7), wherein the carrier (7) has a receiving element for receiving an object (1) and this receiving element is configured in the form of a recess (12) and wherein the recess (12) receives the object (1) completely,
wherein the carrier (7) has at least in the region of the recess (12) a layer-shaped cover (22) for fully covering the recess (12),
wherein the object (1) is a portable data carrier in a first form factor (1) according to ISO/IEC 7816-2 and the carrier (7) is a form adapter for a portable data carrier in a second form factor (4), different from the first form factor (1), according to ISO/IEC in 7816-2
**characterized in that** the carrier (7) has further advance punchings according to ISO/IEC 7816-2 beyond the recess (12), so that the carrier (7) is separable by the pre-punchings, whereby the carrier (7) after the separation has a third form factor (2, 3) according to ISO/IEC 7816-2 which is smaller than the second form factor (4) but greater than the first form factor (1), so that the respective form factor (2, 3, 4) is detachable from the carrier (7) on account of the pre-punchings,
wherein the form factor (4) of the carrier (7) is smaller than a transport shell (6),
wherein the carrier (7) is arranged movably within the transport shell (6),
wherein the transport shell (6) has the dimensions of an ID 1 data carrier according to ISO/IEC 7816-2,
wherein the carrier (7) is incorporated completely into a transport shell (6), wherein the transport shell (6) has a front outer layer (61) and a back outer layer (63),
wherein the carrier (7) is arranged in the transport shell (6) as a movable part in a middle layer (62) between the front outer layer (61) and the back outer layer (63) and the immovable part of the middle layer (62) is connected in a mechanically undetachable manner to the front outer layer (61) and the back outer layer (63) and
wherein the planar carrier (7) is accessible from outside of the transport shell (6) and can be moved.

2. The planar carrier (7) according to claim 1, wherein the carrier (7) has a thickness equal to or greater than a thickness of the object (1), so that the object is received flush at the upper side in the carrier (7).

3. The planar carrier (7) according to any of the previous claims, wherein a perforation (21) is configured on the cover (22).

4. The planar carrier (7) according to any of the previous claims, wherein the cover (22) is configured over the full area on an upper side of the carrier (7).

5. The planar carrier (7) according to any of the previous claims, wherein the cover (22) is made of a paper-like material.

6. The planar carrier (7) according to any of the previous claims, wherein the recess (12) is a punch-through of the carrier (7) and the cover (22) is configured on at least one upper side of the carrier (7).

7. A method for manufacturing a planar carrier (7) according to one of the previous claims 1 to 6 having the method steps:
- supplying a planar carrier material;
- shaping a recess (12), wherein the recess (12) is at least as deep as an object to be incorporated (1) in the planar carrier (7);
**characterized in that:**
- the carrier (7) in the region of the recess (12) is coated with a cover (22), wherein the cover (22) covers the recess (12) completely, wherein the recess (12) is punched out from the carrier (7) before the coating, wherein the method further comprises:
- supplying a front outer layer (61) and a back outer layer (63) of a transport shell (6)
- supplying a middle layer (62) of the transport shell (6);
- arranging the front outer layer (61) on an upper side of the middle layer (62) as well as arranging the back outer layer (63) on a lower side of the middle layer (62) opposing the upper side, wherein the front outer layer (61) the back outer layer (63) and the middle layer (62) are mechanically connected, wherein the middle layer (62) consists of a movable partial element and an immovable partial element, wherein only the immovable partial element of the middle layer (62) is connected to the front outer layer (61) and the back outer layer (63), and the movable partial element is the planar carrier (7).

8. The method according to claim 7, wherein a perforation (21) is configured on the cover (22).

## Revendications

1. Support (7) en forme de feuille, cependant que le support (7) comporte un élément de logement pour le logement d'un objet (1) et que cet élément de logement est réalisé sous forme d'un évidement (12), et cependant que l'évidement (12) loge entièrement l'objet (1),
cependant que le support (7) comporte, au moins dans la zone de l'évidement (12), un recouvrement en couches (22) destiné au recouvrement à pleine surface de l'évidement (12),
cependant que l'objet (1) est un support de données portable dans un premier facteur de forme (1) selon ISO/IEC 7816-2 et que le support (7) est un adaptateur de forme pour un support de données portable dans un deuxième facteur de forme (4), différent du premier facteur de forme (1), selon ISO/IEC 7816-2,
**caractérisé en ce que** le support (7) comporte en outre des découpes préalables selon ISO/IEC 7816-2 à l'extérieur du logement (12), de telle sorte que le support (7) peut être fractionné par les prédécoupes, ce par quoi le support (7) présente après le fractionnement un troisième facteur de forme (2, 3) selon ISO/IEC 7816-2 plus petit que deuxième facteur de forme (4) mais plus grand que le premier facteur de forme (1), de telle sorte que, étant donné les prédécoupes, le facteur de forme respectif (2, 3, 4) peut être détaché du support (7),
cependant que le facteur de forme (4) du support (7) est plus petit qu'un étui (6),
cependant que le support (7) est disposé de façon mobile à l'intérieur de l'étui (6),
cependant que l'étui (6) présente les dimensions d'un support de données ID 1 selon ISO/IEC 7816-2,
cependant que le support (7) est introduit entièrement dans l'étui (6),
cependant que l'étui (6) comporte une couche extérieure (61) antérieure et une couche extérieure (63) postérieure,
cependant que le support (7) est disposé dans l'étui (6) sous forme de partie mobile dans une couche intermédiaire (62) entre la couche extérieure (61) antérieure et la couche extérieure (63) postérieure et que la partie non mobile de la couche intermédiaire (62) est reliée à la couche extérieure (61) antérieure et à la couche extérieure (63) postérieure de manière à ne pas pouvoir être enlevée mécaniquement, et cependant que le support (7) en forme de feuille est accessible depuis l'extérieur de l'étui (6) et peut être déplacé.

2. Support (7) en forme de feuille selon la revendication 1, cependant que le support (7) a une épaisseur égale ou supérieure à une épaisseur de l'objet (1), de telle façon que l'objet est logé dans le support (7) en affleurement avec la face supérieure.

3. Support (7) en forme de feuille selon une des revendications précédentes, cependant que, sur le recouvrement (22), il y a une perforation (21).

4. Support (7) en forme de feuille selon une des revendications précédentes, cependant que le recouvrement (22) est réalisé à pleine surface sur une face supérieure du support (7).

5. Support (7) en forme de feuille selon une des revendications précédentes, cependant que le recouvrement (22) est en un matériau du genre papier.

6. Support (7) en forme de feuille selon une des revendications précédentes, cependant que l'évidement (12) est un poinçonnement du support (7) et que le recouvrement (22) est réalisé sur au moins une face supérieure du support (7).

7. Procédé de fabrication d'un support (7) en forme de feuille conformément à une des revendications précédentes de 1 à 6, comportant les étapes de procédé :
- mise à disposition d'un matériau support en forme de feuille ;
- formation d'un évidement (12), cependant que l'évidement (12) est au moins aussi profond qu'un objet (1) à introduire dans le support (7) en forme de feuille,
**caractérisé en ce que** :
- le support (7) est, dans la zone de l'évidement (12), revêtu d'un recouvrement (22), cependant que le recouvrement (22) recouvre entièrement l'évidement (12),
cependant que l'évidement (12) est découpé depuis le support (7) avant le revêtement,
cependant que le procédé comprend en outre :
- mise à disposition d'une couche extérieure (61) antérieure et d'une couche extérieure (63) postérieure d'un étui (6)
- mise à disposition d'une couche intermédiaire (62) de l'étui (6) ;
- agencement de la couche extérieure (61) antérieure sur une face supérieure de la couche intermédiaire (62), ainsi qu'agencement de la couche extérieure (63) postérieure sur une face inférieure, de la couche intermédiaire (62), opposée à la face supérieure, cependant que la couche extérieure (61) antérieure, la couche extérieure (63) postérieure et la couche intermédiaire (62) sont reliées mécaniquement,
cependant que la couche intermédiaire (62) consiste en un élément partiel mobile et en un élément partiel non mobile, cependant qu'uniquement l'élément partiel non mobile de la couche intermédiaire (62) est relié à la couche extérieure (61) antérieure et à la couche extérieure (63) postérieure et que l'élément partiel mobile est le support (7) en forme de feuille.

8. Procédé selon la revendication 7, cependant que, sur le recouvrement (22), une perforation (21) est pratiquée.
